(19) Europäisches Patentamt
European Patent Office
Office européen des brevets

(11) **EP 2 961 809 B1**

(12) **EUROPEAN PATENT SPECIFICATION**

(45) Date of publication and mention
of the grant of the patent:
**01.01.2020 Bulletin 2020/01**

(51) Int Cl.:
***C09K 5/00*** *(2006.01)*   ***C02F 1/68*** *(2006.01)*
***C23F 11/08*** *(2006.01)*   *C02F 103/02* *(2006.01)*

(21) Application number: **14756346.4**

(22) Date of filing: **26.02.2014**

(86) International application number:
**PCT/US2014/018659**

(87) International publication number:
**WO 2014/134161 (04.09.2014 Gazette 2014/36)**

(54) **CORROSION INHIBITORS FOR COOLING WATER APPLICATIONS**

KORROSIONSHEMMER FÜR KÜHLWASSERANWENDUNGEN

INHIBITEURS DE CORROSION POUR DES APPLICATIONS D'EAU DE REFROIDISSEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2013 US 201361769601 P
25.02.2014 US 201414189632**

(43) Date of publication of application:
**06.01.2016 Bulletin 2016/01**

(73) Proprietor: **Baker Hughes, a GE company, LLC
Houston, TX 77073 (US)**

(72) Inventors:
• **LU, Hiaiping
Sugar Land, TX 77479 (US)**
• **GUO, Bing, Bing
Missouri City, TX 77459 (US)**
• **FULMER, David, N.
Missouri City, TX 77459 (US)**

(74) Representative: **BRP Renaud & Partner mbB
Rechtsanwälte Patentanwälte
Steuerberater
Königstraße 28
70173 Stuttgart (DE)**

(56) References cited:
FR-A1- 2 115 300        GB-A- 1 434 804
US-A- 4 108 790         US-A- 4 108 790
US-A- 5 000 916         US-A- 5 531 931
US-A- 5 589 106         US-A1- 2012 108 489
US-A1- 2012 119 152

**Description**

BACKGROUND OF THE INVENTION

**1. Field of the Invention**

The present invention relates to corrosion inhibitors. The present invention particularly relates to corrosion inhibitors for use in cooling water applications.

2. **Background of the Art**

Corrosion may be a serious problem in industrial cooling water applications. It causes many undesirable consequences, including heat transfer reduction, increasing cleanings, equipment repairs and replacements, and even unscheduled shutdowns. There are numerous approaches to prevent corrosion in cooling water applications. One of the most effective approaches is to use chemicals to treat cooling water to inhibit the occurrence of corrosion.

The common corrosion inhibitors include orthophosphate, polyphosphates, phosphonates, molybdates, silicates, nitrites, etc. Among these corrosion inhibitors, phosphorus based corrosion inhibitors are widely used for carbon steel corrosion control in cooling water applications because they have good cost effectiveness and performance. However, cooling water is eventually discharged into surface water, and there are more and more concerns on the impact of phosphorus on the environment due to algal bloom. Furthermore, the presence of phosphorus may react with the calcium ions in cooling water to form calcium phosphate scale, which causes the fouling and blocking of pipelines and heat transfer reductions. Therefore, non-phosphorus (non-P) inhibitors are needed for corrosion control in cooling water applications. Corrosion inhibitors and method of their uses are disclosed in GB 1 434 804, US 2012/119152 A1, FR 2 115 300 A1 and US 4 108 790.

This invention discloses the art of novel, high performance non-phosphorus chemical corrosion inhibition treatment program which can be used in cooling water applications for preventing the carbon steel corrosion. This treatment program is more environmentally friendly than the current common phosphorus corrosion inhibitors.

SUMMARY OF THE INVENTION

In one aspect, the invention is a method for preventing or mitigating corrosion in cooling water comprising treating the cooling water with an additive consisting of a soluble zinc salt and a saccharic acid or a water soluble saccharic acid salt.

In another aspect, a method is disclosed for preventing or mitigating corrosion in cooling water comprising treating the cooling water with an additive comprising a soluble zinc salt and a compound selected from the group consisting of gluconic acid, saccharic acid, a water soluble gluconate salt, saccharic acid salt, and combinations thereof.

In still another aspect, a method is disclosed for preventing or mitigating corrosion in cooling water comprising treating the cooling water with an additive comprising a soluble zinc carboxylate.

Another aspect is a method for preventing or mitigating corrosion in cooling water comprising treating the cooling water with an additive comprising a compound selected from the group consisting of zinc gluconate, the salt of zinc and saccharic acid, and combinations thereof.

Other compounds may also be included in the additives of this application, but they do not form part of the invention. For example, in addition to the zinc salts already discussed above, scale inhibitors, yellow metal corrosion inhibitors, such as tolyltriazole and benzotriazole, dispersants, deodorants, biocides, and dyes may also be included in the additives.

DESCRIPTION OF THE PREFERRED EMBODIMENTS

For the purposes of this application, the term cooling water is defined as water used for heat exchangers in commercial processes such as chemical plants and refineries. Generally cooling water streams will have a pH of from about 7.0 to 9.2. Often they are buffered and sometimes have been treated to remove excessive dissolved solids.

The composition of this invention may contain sufficient amounts of each of the components to provide, when added to cooling water: 30-300 parts per million (ppm) by weight carboxylic acid or its soluble salts; and up to 10 ppm by weight of soluble zinc salts. In one embodiment the additive may include: 30-180 ppm by weight carboxylic acid and its soluble salts and up to 4 ppm by weight of soluble zinc salts.

In one aspect, the invention is a method for preventing or mitigating corrosion in cooling water comprising treating the cooling water with an additive consisting of a soluble zinc salt and a saccharic acid or a water soluble saccharic acid salt.

The soluble zinc salts may be any known to those of ordinary skill in the art to be both soluble and free from counter ions that may be problematic in cooling water. For example, zinc chloride and zinc bromide and even zinc hydroxide may be used while zinc phosphate would be undesirable. Other salts that may be used with the method of the application include, but are not limited to zinc carbonate, zinc borate, zinc nitrate, and combinations thereof. Hydrates may also be used, particularly where the hydrate may be soluble while the unhydrated salt is not.

The additive, not forming part of the invention, may be a zinc carboxylate salt or it may be the product of admixing a first salt and a second salt with the first salt being a soluble zinc salt and the second salt being a soluble carboxylic acid salt. In one embodiment, the zinc salt is selected from the group consisting of a soluble gluconic acid salt, a soluble saccharic acid salt, and combinations thereof.

The additives in the application may include other compounds, which compositions do not form part of the invention. For example, in addition to the zinc salts already discussed above, yellow metal corrosion inhibitor such as tolyltriazole or benzotriazole, scale dispersants, deodorants, biocides, dyes, may also be included in the additives.

The Carboxylic Acid(s)

The carboxylic acid component of the additive may be selected from the group consisting of saccharic acid or water soluble saccharic acid salt. In one embodiment, gluconic acid and its sodium salt, saccharic acid and its potassium and calcium salts are used to prepare the additives of the method of the disclosure.

Zinc

The additives useful with the method of the disclosure may, in one embodiment, be prepared using zinc chloride. In other embodiments, the water soluble zinc salts may be selected from the group consisting of zinc sulfate and zinc oxide.

The additive may be prepared using any methods known to those of ordinary skill in the art of preparing zinc salts and admixtures comprising zinc salts. Hydrates may be used, especially where a salt would otherwise be insoluble or difficult to handle.

While not wishing to be bound by any theory, it is nevertheless believed that the carboxylic acids useful with the method of the application are those that do not coordinate too strongly with the zinc. For example gluconic acid, a monocarboxylic acid and saccharic acid, a dicarboxylic acid may both be used and are very efficient for preventing corrosion. In contrast however, butane tetracarboxylic acid and malic acid, a four functional and two functional acid respectively, show corrosion inhibition performance, but higher dosage are needed to obtain same inhibition efficiency than those of gluconic acid and saccharic acid.

## EXAMPLES

The following examples are provided to illustrate corrosion inhibition with different additives. Only example 23 is according to the invention. The examples are not intended to limit the scope of the claims and they should not be so interpreted. Amounts are in weight parts or weight percentages unless otherwise indicated.

EXAMPLES 1-30

The composition of a cooling water sample shown in Table 1 is treated according to the conditions set forth in Table 2. Carbon steel 1010 (CS1010) coupons are used and corrosion is determined by using the technique of linear polarization resistance. Chemical concentrations used are expressed in parts per million (ppm). The unit of corrosion rate is in mils per year (mpy). The inhibition efficiency in Table 2 was calculated by equation (1)

$$\text{Inhibition Efficiency} = \left( \frac{Corrosion\ Rate_{Blank} - Corrosion\ rate_{Dosage}}{Corrosion\ Rate_{Blank}} \right) \times 100\% \qquad (1)$$

where $Corrosion\ Rate_{Blank}$ is the corrosion rate without any additions of chemical treatments, $Corrosion\ rate_{Dosage}$ is the corrosion rate with specific dosages of chemicals.

COMMENTS REGARDING THE EXAMPLES

The combination of zinc with gluconate and saccharate salts were very efficient, needing only 60 or fewer parts per million to reduce 90% of the corrosion rate of carbon steel coupon observed in the blanks. The gluconic acid is a monocarboxylic acid. The saccharic acid is a dicarboxylic acid but it has a hydroxyl group on every carbon between the acid groups which hinders free rotation about the axis of the two acidic groups. More tests with other compounds, such as either di- or higher functional acids, or the compounds included other groups such as amino groups, showed inhibition performance with higher or even much dosages to reach 90% corrosion inhibition.

Table 1

| | |
|---|---|
| Na+ (ppm) | 273 |
| Ca2+ (ppm) | 200 |
| Mg2+ (ppm) | 50 |
| Fe2+ (ppm) | 0.5 |
| HCO3-(ppm) | 100 |
| Cl- (ppm) | 500 |
| SO42- (ppm) | 496 |

Table 2

| Example | Citric Acid (ppm) | Tartaric Acid (ppm) | Sodium Gluconate (ppm) | Butane-tetracarboxylic acid (ppm) | Saccharic Acid (ppm) | Malic Acid (ppm) | Glycolic acid (ppm) | Erythorbic acid (ppm) | Poly-aspartic acid (ppm) | $Zn^{2+}$ (ppm) | Corr. Rate (mpy) | Inhibition Efficiency |
|---|---|---|---|---|---|---|---|---|---|---|---|---|
| 1 | 0 | 0 | 0 | 0 | 0 | 0 | 0 | 0 | 0 | 0 | 27 | N/A |
| 2 | 0 | 0 | 0 | 0 | 0 | 0 | 0 | 0 | 0 | 2 | 30 | N/A |
| 3 | 60 | | | | | | | | | | 19.2 | 28.9 |
| 4 | 60 | | | | | | | | | 2 | 15.9 | 41.1 |
| 5 | 180 | | | | | | | | | 2 | 1.49 | 94.5 |
| 6 | 120 | | | | | | | | | 2 | 9.19 | 66.0 |
| 7 | 30 | | 30 | | | | | | | 2 | 7.47 | 72.3 |
| 8 | | 60 | | | | | | | | | 23.9 | 11.5 |
| 9 | | 60 | 60 | | | | | | | | 14 | 48.1 |
| 10 | | 60 | | | | | | | | 2 | 8.8 | 67.4 |
| 11 | | 120 | | | | | | | | 2 | 2.78 | 89.7 |
| 12 | | 30 | 60 | | | | | | | 2 | 1.03 | 96.2 |
| 13 | | 30 | 30 | | | | | | | 2 | 3.87 | 85.7 |
| 14 | | 180 | 60 | | | | | | | | 10.8 | 60.0 |
| 15 | | 180 | | | | | | | | 2 | 0.94 | 96.5 |
| 16 | | | 60 | | | | | | 60 | | 23.4 | 13.3 |
| 17 | | | 30 | | | | | | | 2 | 3.04 | 88.7 |
| 18 | | | 180 | | | | | | | | 7.09 | 73.7 |
| 19 | | | 60 | | | | | | | 2 | 1.5 | 94.4 |
| 20 | | | | 60 | | | | | | | 15.9 | 41.1 |
| 21 | | | | 60 | | | | | | 2 | 15 | 44.4 |
| 22 | | | | | 60 | | | | | | 4.88 | 81.9 |
| 23 | | | | | 60 | | | | | 2 | 0.73 | 97.3 |

(continued)

| Example | Citric Acid (ppm) | Tartaric Acid (ppm) | Sodium Gluconate (ppm) | Butane-tetracarboxylic acid(ppm) | Saccharic Acid (ppm) | Malic Acid (ppm) | Glycolic acid (ppm) | Erythorbic acid (ppm) | Poly-aspartic acid (ppm) | Zn$^{2+}$ (ppm) | Corr. Rate (mpy) | Inhibition Efficiency |
|---|---|---|---|---|---|---|---|---|---|---|---|---|
| 24 | | | | | 180 | | | | | | 1.73 | 93.6 |
| 25 | | | | | | 60 | | | | 2 | 10.4 | 61.5 |
| 26 | | | | | | 180 | | | | 2 | 6.82 | 74.7 |
| 27 | | | | | | | 60 | | | 2 | 16.4 | 39.3 |
| 28 | | | | | | | | 60 | | 2 | 10.4 | 61.5 |
| 29 | | | | | | | | 180 | | 2 | 3.78 | 86.0 |
| 30 | | | | | | | | | 60 | 2 | 8.64 | 68.0 |

**Claims**

1. A method for preventing or mitigating corrosion in cooling water systems comprising treating the cooling water with an additive consisting of (a) a soluble zinc salt and (b) saccharic acid or a water soluble saccharic acid salt; wherein the additive, when added to cooling water is present at a concentration sufficient to provide from about 30 to about 300 ppm by weight saccharic acid or its soluble salts.

2. The method of Claim 1 wherein the soluble zinc salt is selected from the group consisting of: zinc chloride, zinc bromide, zinc hydroxide, zinc carbonate, zinc borate, zinc nitrate, and combinations thereof.

3. The method of Claim 2 wherein the soluble zinc salt is selected from the group consisting of: zinc chloride, zinc bromide, zinc hydroxide and combinations thereof.

4. The method of Claim 1 wherein the additive, when added to cooling water is present at a concentration sufficient to provide from about 30 to about 180 ppm by weight saccharic acid or its soluble salts.

5. The method of Claim 1 wherein the additive, when added to cooling water is present at a concentration sufficient to provide up to 10 ppm by weight of soluble zinc salts.

6. The method of Claim 1 wherein the additive, when added to cooling water is present at a concentration sufficient to provide up to 4 ppm by weight of soluble zinc salts.

7. The method of Claim 1 wherein the water soluble saccharic acid salt is selected from the group consisting of its potassium salts, its calcium salts, and combinations thereof.

**Patentansprüche**

1. Verfahren zur Verhinderung oder Verminderung von Korrosion in Kühlwassersystemen, umfassend das Behandeln des Kühlwassers mit einem Additiv, das aus (a) einem löslichen Zinksalz und (b) Zuckersäure oder einem wasserlöslichen Zuckersäuresalz besteht;
wobei das Additiv, wenn es zu Kühlwasser hinzugegeben wird, in einer Konzentration vorliegt, die ausreicht, um von etwa 30 bis etwa 300 ppm, bezogen auf das Gewicht der Zuckersäure oder deren löslichen Salze, bereitzustellen.

2. Verfahren nach Anspruch 1, wobei das lösliche Zinksalz ausgewählt ist aus der Gruppe, bestehend aus: Zinkchlorid, Zinkbromid, Zinkhydroxid, Zinkkarbonat, Zinkborat, Zinknitrat und Kombinationen davon.

3. Verfahren nach Anspruch 2, wobei das lösliche Zinksalz ausgewählt ist aus der Gruppe, bestehend aus: Zinkchlorid, Zinkbromid, Zinkhydroxid und Kombinationen davon.

4. Verfahren nach Anspruch 1, wobei das Additiv, wenn es zu Kühlwasser hinzugegeben wird, in einer Konzentration vorliegt, die ausreicht, um von etwa 30 bis etwa 180 ppm, bezogen auf das Gewicht an Zuckersäure oder ihren löslichen Salzen, bereitzustellen.

5. Verfahren nach Anspruch 1, wobei das Additiv, wenn es zu Kühlwasser hinzugegeben wird, in einer Konzentration vorliegt, die ausreicht, um bis zu 10 ppm, bezogen auf das Gewicht der löslichen Zinksalze, bereitzustellen.

6. Verfahren nach Anspruch 1, wobei das Additiv, wenn es zu Kühlwasser hinzugegeben wird, in einer Konzentration vorliegt, die ausreicht, um bis zu 4 ppm, bezogen auf das Gewicht der löslichen Zinksalze, bereitzustellen.

7. Verfahren nach Anspruch 1, wobei das wasserlösliche Zuckersäuresalz ausgewählt ist aus der Gruppe, bestehend aus Kaliumsalzen, deren Calciumsalzen und Kombinationen davon.

**Revendications**

1. Procédé pour empêcher ou atténuer la corrosion dans des systèmes de refroidissement à eau comprenant le traitement de l'eau de refroidissement avec un additif constitué de (a) un sel de zinc soluble et (b) de l'acide saccharique ou un sel hydrosoluble d'acide saccharique ;
dans lequel l'additif, lorsqu'il est ajouté à de l'eau de refroidissement est présent à une concentration suffisante pour fournir d'environ 30 à environ 300 ppm en poids d'acide saccharique ou de ses sels solubles.

2. Procédé selon la revendication 1 dans lequel le sel de zinc soluble est choisi dans le groupe constitué de : chlorure de zinc, bromure de zinc, hydroxyde de zinc, carbonate de zinc, borate de zinc, nitrate de zinc, et des combinaisons de ceux-ci.

3. Procédé selon la revendication 2 dans lequel le sel de zinc soluble est choisi dans le groupe constitué de : chlorure de zinc, bromure de zinc, hydroxyde de zinc et des combinaisons de ceux-ci.

4. Procédé selon la revendication 1 dans lequel l'additif, lorsqu'il est ajouté à de l'eau de refroidissement est présent à une concentration suffisante pour fournir d'environ 30 à environ 180 ppm en poids d'acide saccharique ou de ses sels solubles.

5. Procédé selon la revendication 1 dans lequel l'additif, lorsqu'il est ajouté à de l'eau de refroidissement est présent à une concentration suffisante pour fournir jusqu'à 10 ppm en poids de sels de zinc solubles.

6. Procédé selon la revendication 1 dans lequel l'additif, lorsqu'il est ajouté à de l'eau de refroidissement est présent à une concentration suffisante pour fournir jusqu'à 4 ppm en poids de sels de zinc solubles.

7. Procédé selon la revendication 1 dans lequel le sel hydrosoluble d'acide saccharique est choisi dans le groupe constitué de ses sels de potassium, ses sels de calcium, et des combinaisons de ceux-ci.

**EP 2 961 809 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1434804 A
- US 2012119152 A1
- FR 2115300 A1
- US 4108790 A